(19) Europäisches Patentamt
European Patent Office
Office européen des brevets

(11) **EP 1 165 353 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(51) Int Cl.⁷: **B60T 8/24**, B60T 13/66

(21) Anmeldenummer: **00909304.8**

(86) Internationale Anmeldenummer:
**PCT/EP2000/001855**

(22) Anmeldetag: **03.03.2000**

(87) Internationale Veröffentlichungsnummer:
**WO 2000/053473 (14.09.2000 Gazette 2000/37)**

(54) **VERFAHREN ZUR AUFRECHTERHALTUNG DER MOTORBREMSWIRKUNG**

METHOD OF MAINTAINING THE EFFECT OF THE ENGINE BRAKE

PROCEDE PERMETTANT DE CONSERVER L'EFFET DU FREIN MOTEUR

(84) Benannte Vertragsstaaten:
**DE FR GB**

(30) Priorität: **08.03.1999 DE 19910055**
**05.05.1999 DE 19920617**

(43) Veröffentlichungstag der Anmeldung:
**02.01.2002 Patentblatt 2002/01**

(73) Patentinhaber: **Continental Teves AG & Co. OHG**
**60488 Frankfurt am Main (DE)**

(72) Erfinder:
• **HEYN, Harald**
**35091 Colbe-Bürgeln (DE)**
• **KÜMMEL, Martin**
**D-34286 Spangenberg (DE)**
• **CORELL, Thomas**
**D-65187 Wiesbaden (DE)**

(56) Entgegenhaltungen:
**DE-A- 3 736 807      DE-A- 19 637 297**
**DE-A- 19 835 937**

EP 1 165 353 B1

**Beschreibung**

Die Erfindung betrifft ein Verfahren zur Aufrechterhaltung der Motorbremswirkung eines Fahrzeugs während einer Gefällefahrt durch einen aktiven, elektronisch gesteuerten Bremseneingriff an mindestens einem Rad.

Es sind Straßenfahrzeuge bekannt, bei denen Einrichtungen vorgesehen sind, durch welche das Fahrverhalten des Fahrzeugs unabhängig vom Fahrer mittels vorgebbarer Drücke in einzelnen Radbremsen und mittels Eingriff in das Motormanagement des Antriebsmotors beeinflußt werden kann. Dabei handelt es sich um Bremsschlupfregelung (ABS), welche während eines Bremsvorgangs das Blockieren einzelner Räder verhindern soll, um Antriebsschlupfregelung (ASR), welche das Durchdrehen der angetriebenen Räder verhindert, um elektronische Bremskraftverteilung (EBV), welche das Verhältnis der Bremskräfte zwischen Vorder- und Hinterachse des Fahrzeugs regelt, sowie um eine elektronische Fahrstabilitätsregelung (ESP), welche für stabile Fahrzustände beim Durchfahren einer Kurve sorgt.

Mit Fahrzeug ist also in diesem Zusammenhang ein Kraftfahrzeug mit vier Rädern gemeint, welches mit einer hydraulischen Bremsanlage ausgerüstet ist. Die dadurch bereits vorhandenen Baugruppen wie Elektronik, Raddrehzahlsensoren, Beschleunigungssensoren, Magnetregelventile usw. werden mitbenutzt, um das Verfahren zum Regeln der Fahrgeschwindigkeit eines Fahrzeugs während einer Gefällefahrt durchzuführen, soweit sie für dieses Verfahren benötigt werden. Es ist selbstverständlich, daß diese bekannten Baugruppen auch ausschließlich für das Verfahren zur Aufrechterhaltung der Motorbremswirkung eines Fahrzeugs während einer Gefällefahrt in einem Fahrzeug eingesetzt werden können.

Aus der WO 96/11826 A1 ist ein Fahrzeug mit einer sog. Hügel-Abfahrts-Regelung (auch bezeichnet als HDC = Hill Descent Control) bekannt, die von einem Fahrer durch einen Schalter eingeschaltet werden kann. Die Regelung ist in der Lage, durch eine aktive, geregelte Bremsung das Fahrzeug auf einer steilen Gefällestrecke auf einer konstanten, niedrigen Geschwindigkeit zu halten, ohne daß der Fahrer die Bremsen zu betätigen braucht. Dieses System ist besonders für Geländefahrzeuge vorgesehen, die auf einem Gefälle fahren, das so steil ist, daß die Motorbremswirkung auch im niedrigsten Gang nicht mehr ausreicht, um das Fahrzeug zu verzögern. Ein Geschwindigkeitsregler vergleicht die Soll- mit der Ist-Geschwindigkeit und berechnet daraus unter Einbeziehung verschiedener Randbedingungen einen Bremsdruck für alle vier Radbremsen.

Weiterhin ist aus der DE 198 17 212 A1 ein System für vierradangetriebene Fahrzeuge mit zentralem Differentialgetriebe bekannt, das eine Einrichtung zur Bremsregelung vorsieht, mittels der entweder Bremskraft auf ein sich frei drehendes Rad, das keine Kraft auf eine Fahrbahn übertragen kann, oder auf die beiden Vorderräder aufgebracht wird. Damit soll bei einem permanent vierradangetriebenen Fahrzeug ein unbeabsichtigtes Beschleunigen aufgrund eines frei drehenden Rades vermieden werden, da unter diesen Bedingungen kein Motorbremsmoment übertragen wird, wenn das zentrale Differentialgetriebe nicht durch einen zentralen Differentialsperrmechanismus gesperrt wird.

Der Erfindung liegt die Aufgabe zugrunde, ein Verfahren zur Aufrechterhaltung der Motorbremswirkung eines Fahrzeugs während einer Gefällefahrt zu schaffen, welches entgegengesetzt zur Fahrtrichtung drehende Räder und ein Beschleunigen des Fahrzeugs sicher verhindert.

Diese Aufgabe wird durch die Merkmale des Anspruchs 1 gelöst.

Vorteilhafte Weiterbildungen sind in den Unteransprüchen angegeben.

Dadurch, daß bei dem Verfahren zur Aufrechterhaltung der Motorbremswirkung eines Fahrzeugs während einer Gefällefahrt durch einen aktiven, elektronisch gesteuerten Bremseneingriff an mindestens einem Rad eine Statusbestimmung der Räder in "stabile Räder" und "instabile Räder" und dem Abbremsen aller stabilen Räder bei mindestens einem instabilen Rad, bei dem die Bedingungen

vorzugsweise $\quad A_{instabil} < -0{,}4\ h$
und $\qquad V_{instabil} < K_i \times V_{ref}$

auftreten, mit

$V_{instabil}$ = Geschwindigkeit des instabilen Rades
$V_{ref}$ = gefilterte mittlere Radgeschwindigkeit der stabilen Räder
$K_i$ = Korrekturfaktor ($K_i < 1$)
$A_{instabil}$ = Beschleunigung des instabilen Rades

wird das Motorantriebsmoment über das Differentialgetriebe auf das instabile Rad übertragen und damit ein Rückwärtsdrehen des instabilen Rades verhindert, da die Drehung des instabilen Rades in eine Richtung entgegengesetzt zu den stabilen Rädern nur auftreten kann, wenn kein Motorantriebsmoment auf das instabile Rad wirkt. Der Erfindung liegt die Erkenntnis zugrunde, daß die Summe der vier Radgeschwindigkeiten aufgrund der gleichbleibenden Motordrehzahl und des konstanten Übersetzungsverhältnisses der Differentialgetriebe gleichbleibt, so daß die Räder auf hohem Reibwert beschleunigen, während die Räder auf niedrigem Reibwert verzögern, stoppen und rückwärts drehen. Bei µ-Split-Gefällen können die Niedrig-µ-Räder beide rückwärts drehen.

Der Status der Räder wird nach

$$V_{ref} - K_b < V_{stabil} < V_{ref} + K_b$$

bestimmt, mit

$V_{ref}$ = gefilterte mittlere Radgeschwindigkeit der stabilen Räder
$K_b$ = Korrekturfaktor

$V_{stabil}$ = stabiles Rad.

Die Räder sind dabei stabil, wenn die Radgeschwindigkeiten in einem Band um die mittlere Radgeschwindigkeit liegen, das heißt innerhalb eines Bandes, welches von dem Korrekturfaktor $K_b$ bestimmt ist, welcher in einem Band von 2,5 km/h, vorzugsweise 1,3 km/h, oberhalb und unterhalb der mittleren Radgeschwindigkeit liegt. Die Räder sind instabil, wenn die Radgeschwindigkeiten außerhalb des o.g. Bandes liegen.

Dabei wird die mittlere Radgeschwindigkeit $V_{ref}$ aus dem gefilterten maximalen Wert des zweitschnellsten Rades und der Fahrzeuggeschwindigkeit gebildet, d.h. das tiefpaßgefilterte Maximum des zweitschnellsten Rades und der Fahrzeuggeschwindigkeit oder der ABS-Referenzgeschwindigkeit wird gebildet. Die TiefpaßFilterung der mittleren Radgeschwindigkeit erfolgt mit 2,5 Hz.

Der Korrekturfaktor Ki ist kleiner 1/2. Dadurch, daß der Status eines instabilen Rades kleiner als 50 % der mittleren Radgeschwindigkeit ist, werden die stabilen Räder sofort bei festgestelltem instabilem Rad abgebremst. Ein instabiles Rad kann unter den für die Statusbestimmung maßgebenden Bedingung nicht rückwärts drehen, da bei einer Radgeschwindigkeit des instabilen Rades, die kleiner als 50 % der mittleren Radgeschwindigkeit ist, auf das instabile Rad ein Motorantriebsmoment aufgebracht wird, bevor es rückwärts drehen kann.

Dadurch, daß weiterhin die Radbeschleunigung des instabilen Rades kleiner ist als -0,4 g, wird sichergestellt, daß die gegebenenfalls tatsächliche Gefahr erkannt wird, daß das instabile Rad die Drehrichtung wechseln kann.

Der zum Abbremsen der stabilen Räder in den Radbremszylindern der Radbremsen einzusteuernde Druck wird nach

$$req_p = K \times (v_{ref} - V_{ref\,nom})) + Offset$$

bestimmt, mit

$req_p$ = Druckanforderung der stabilen Räder
$K$ = 7 bar/(km/h)
$V_{ref\,nom}$ = Durchschnittsgeschwindigkeit aller Räder vor Erkennen eines instabilen Rades
Offset = 5 bar.

Die Druckanforderung der stabilen Räder berechnet sich dabei aus der Differenz der Durchschnittsgeschwindigkeit der stabilen Räder zur Durchschnittsgeschwindigkeit aller Räder vor Erkennen eines instabilen Rades mit einem Korrekturfaktor und Versatzfaktor.

Vorteilhaft werden die Statusbestimmungen über eine Anzahl von n Zeitschritten aufgeteilt, wobei mindestens die Werte der letzten Statusbestimmung gespeichert werden. Nach einem Ausführungsbeispiel wird die Druckanforderung der vorhergehenden Statusbestimmung mit der Druckanforderung der aktuellen Statusbestimmung verglichen, wobei die aktuelle Druckanforderung verworfen wird, wenn die Druckanforderung der aktuellen Statusbestimmung im Betrag um weniger als $p_{kp}$ von der Druckandorderung der vorhergehenden Statusbestimmung abweicht. Dabei ist der Referenzfaktor $K_p$ < 1 bar. Durch diese Maßnahme wird eine Ansteuerung der Hydraulikventile unterbunden, um den Regelungskomfort zu erhöhen und das Geräuschniveau zu senken.

Nach einem weiteren Ausführungsbeispiel werden die instabilen Räder der vorhergehenden Statusbestimmung mit den Rädern der aktuellen Statusbestimmung verglichen und beim Abbremsen eines vorhergehenden instabilen Rades der Druckaufbau dieses Rades verzögert. Die Verzögerung des Druckaufbaus am vorhergehenden instabilen Rad erfolgt innerhalb eines Zeitraums von 1 bis 2 sec., vorzugsweise innerhalb 1,5 sec. Die Regelung der Fahrgeschwindigkeit tritt nur in Funktion, wenn die Fahrzeuggeschwindigkeit < 30 km/h, vorzugsweise < 20 km/h, insbesondere < 12 km/h ist, und keine Radbremse aktiv ist.

Ein Ausführungsbeispiel der Erfindung ist der Zeichnung angegeben und wird im folgenden näher beschrieben.

Es zeigen:

Fig. 1 zeigt ein vereinfachtes Schema der Einrichtung nach der Erfindung

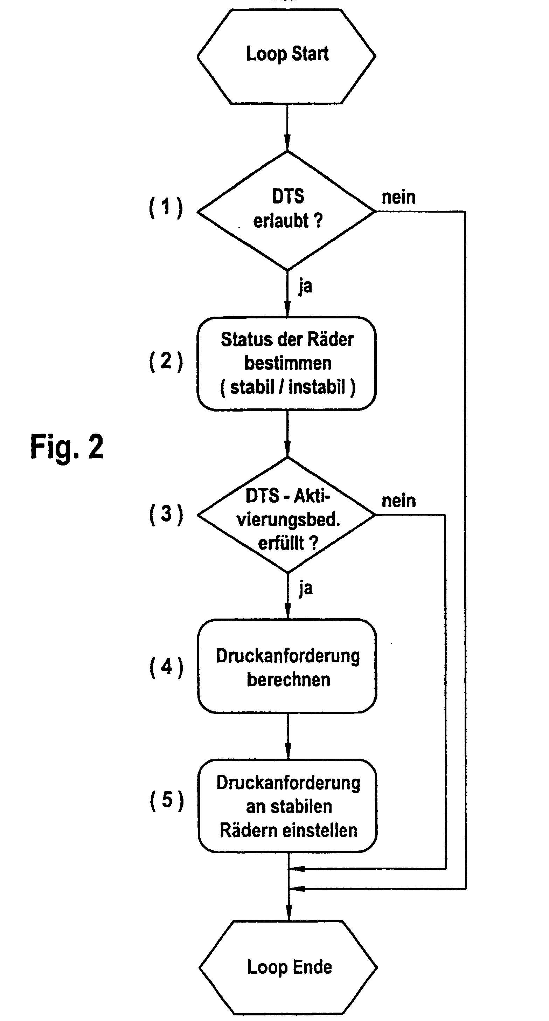

Fig. 2 zeigt einen Ablaufplan des Verfahrens zum Regeln der Motorbremswirkung eines Fahrzeugs während einer Gefällefahrt.

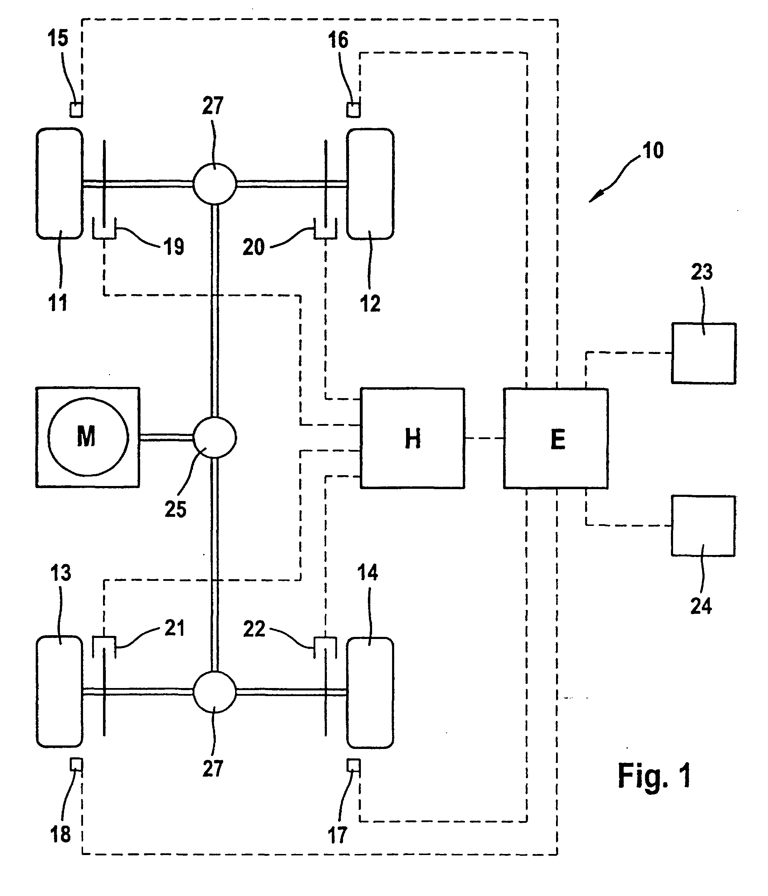

Wie Fig. 1 zeigt, weist das Fahrzeug 10 vier Räder 11,12,13,14 auf. Jedem Rad ist ein Radsensor 15,16,17,18 zugeordnet, mittels dem die Radgeschwindigkeiten erfaßt werden. Die von den Radsensoren erfaßten Werte werden einer elektronischen Regeleinheit E zugeführt, die entsprechend den eingegebenen und berechneten Zustandsgrößen über eine Hydraulikeinheit H die jedem Rad 11 bis 14 zugeordneten Radbremsen 19,20,21,22 steuert. Weiterhin werden der elektronischen Regeleinheit E Werte zugeführt, die mittels Sensoren 23,24 am Bremspedal und Gaspedal erfaßt werden. Die Sensoren 23,24 geben somit Analogsignale zu der elektronischen Regeleinheit E, welche abhängig sind von der Position oder dem Winkel des Brems- oder Gaspedals.

Wie Fig. 1 weiterhin zeigt, ist das Fahrzeug 10 ein permanent allradangetriebenes Fahrzeug, welches über eine Motor-Getriebe-Einheit M und ein zentrales Differentialgetriebe 25 und ein Vorderachs-Differentialgetriebe 26 und ein Hinterachs-Differentialgetriebe 27 angetrieben wird.

Das hydraulische Bremssystem, mit den ansteuerbaren Magnetventilen, ist an sich bekannt und braucht daher nicht näher beschrieben zu werden. Es muß lediglich die Forderung erfüllen, daß alle Radbremsen 19 bis 22 separat von der elektronischen Regeleinheit E über die Hydraulikeinheit H angesteuert werden können. Im normalen Betrieb des Fahrzeugs steuert die elektronische Regeleinheit E die Hydraulikeinheit H mittels Antiblockier-Funktion, um ein Blockieren der Räder 11 bis 14 zu verhindern, wenn der Fahrer das Bremspedal betätigt. Weiterhin ist eine Antriebsschlupfregelung vorgesehen. Beide Funktionen werden in bekannter Weise unter Erfassung der Geschwindigkeit und Beschleunigung von jedem Rad 11 bis 14 und einer aus den Geschwindigkeiten der Räder berechneten Fahrzeuggeschwindigkeit ausgeführt. Die Fahrzeuggeschwindigkeit wird aus einem Durchschnittswert der Radgeschwindigkeiten errechnet, die die Geschwindigkeiten von Rädern unberücksichtigt läßt, die blockieren oder im Schlupf sind.

Um in den Motorschleppmoment-Unterstützungs-Modus (DTS-Dragtorque Support) eintreten zu können, überprüft die elektronische Regeleinheit grundsätzlich, ob das DTS-System verfügbar ist, keine Giermomentenregelung aktiv ist und die Fahrerbremsdruckvorgabe kleiner als die zum Abbremsen der stabilen Räder ermittelte Druckanforderung ist. Sind die vorgenannten Bedingungen erfüllt und ist die Fahrzeuggeschwindigkeit kleiner 30 km/h, vorzugsweise kleiner 20 km/h, wird das DTS-System aktiviert. Wird eine der Eingangsvoraussetzungen nicht erfüllt, d.h. ist die Fahrzeuggeschwindigkeit 30 km/h und größer oder liegt ein Systemfehler vor oder ist eine Giermomentenregelung aktiv oder ist die Fahrerbremsdruckvorgabe größer als die zum Abbremsen der stabilen Räder ermittelte Druckanforderung, wird der Algorithmus des DTS-Systems beendet.

Die Eingangsüberprüfung der Zustandsgrößen Fahrzeuggeschwindigkeit und Fahrzeugbremsung wird aus den von den Sensoren 23,24 der elektronischen Regeleinheit E zugeführten Signale abgeleitet, die die Position oder den Winkel des Gas- und Bremsdruckpedals erfassen.

Selbstverständlich kann die Fahrzeuggeschwindigkeit auch, wie vorstehend beschrieben, aus den Signalen der Radsensoren 15 bis 18 gebildet werden. Sind die Eingangsvoraussetzungen erfüllt, wird der Status der Räder 11 bis 14 bestimmt. Dabei wird eine Aufteilung der Räder 11 bis 14 in "stabile Räder" und "instabile Räder" vorgenommen.

Hierzu wird der Status der Räder, z.B. 11 bis 13, nach
$V_{ref} - K_b < V_{stabil} < V_{ref} + K_b$ bestimmt,
mit $V_{ref}$ = mittlere Radgeschwindigkeit
$K_b$ = Korrekturfaktor
$V_{stabil}$ = stabiles Rad.
Liegt die Radgeschwindigkeit außerhalb des o.g. Bandes, ist das Rad instabil.

Der Korrekturfaktor $K_b$ ist voruzugsweise 1,3 km/h, so daß ein Rad stabil ist, wenn die Radgeschwindigkeit in einem Band um die mittlere Radgeschwindigkeit $V_{ref}$ von vorzugsweise 1,3 km/h liegt. Die mittlere Radgeschwindigkeit $V_{ref}$ wird dabei aus dem mit 2,5 Hz tiefpaß gefilterten maximalen Wert des zweitschnellsten Rades und der Fahrzeuggeschwindigkeit oder der an sich bekannten ABS-Referenzgeschwindigkeit die im ABS-Regler bestimmt wird, gebildet. Das Maximum des zweitschnellsten Rades wird zur Bildung der mittleren Radgeschwindigkeit herangezogen, um das mit hoher Geschwindigkeit drehende instabile Rad sicher auszuschließen.

Danach erfolgt die Aktivierung der Radbremsen der stabilen Räder, wenn die Bedingung $V_{instabil} < K_i \times V_{ref}$ und
Ainstabil < - 0,4g eintritt, mit
$V_{instabil}$ = Geschwindigkeit des instabilen Rades
$A_{instabil}$ = Beschleunigung des instabilen Rades
$V_{ref}$ = gefilterte mittlere Radgeschwindigkeit der stabilen Räder $K_i$ = Korrekturfaktor.

Wenn die Radgeschwindigkeit des instabilen Rades kleiner als 50 % der mittleren Radgeschwindigkeit ist, d.h. wenn der Korrekturfaktor $K_i < 1/2$ ist und die Radbeschleunigung des instabilen Rades < - 0,4 g ist, wird eine Druckanforderung berechnet, mittels der alle stabilen Räder durch Einsteuern eines Bremsdruckes in die Radbremszylinder der Radbremsen 19 und/oder 21 und/oder 22 entsprechend der berechneten Druckanforderung abgebremst werden.

Die Druckanforderung für die stabilen Räder wird nach

$$reg_p = K \times (v_{ref} - V_{ref\,nom})) + Offset$$

bestimmt, mit
$reg_p$ = Druckanforderung der stabilen Räder
K = 7 bar/km/h)
$V_{ref\,nom}$ = Druchschnittsgeschwindigkeit
aller Räder vor Erkennen eines instabilen Rades
Offset = 5 bar.

Die Druckanforderung berechnet sich aus der Differenz der Durchschnittsgeschwindigkeit der stabilen Räder zur Durchschnittsgeschwindigkeit aller Räder vor Erkennen eines instabilen Rades. Ist die Druckanforderung der stabilen Räder berechnet, wird Bremsdruck entsprechend der berechneten Druckanforderung in die stabilen Räder, beispielsweise 11 bis 13 eingesteuert und damit das Motorantriebsmoment auf das instabile Rad übertragen. Durch den Ausgleich des Motorschleppmomentverlustes an den instabilen Rädern z.B. 14 durch aktiven Druckaufbau an den stabilen Rädern, d.h. an den Rädern auf hohem Reibwert, wird ein Beschleunigen des Fahrzeug 10 und ein Rückwärtsdrehen der instabilen Räder z.B. 14 sicher verhindert. Der Druckaufbau kann wahlweise durch die der Hydraulikeinheit H zugeordnete Rückförderpumpe oder durch eine aktive Ansteuerung des Bremskraftverstärkern (Booster) erfolgen.

Nach einem Ausführungsbeispiel nach der Erfindung wird die Statusbestimmung über eine Anzahl von n Zeitschritten aufgeteilt, wobei mindestens die Werte der letzten Statusbestimmung gespeichert werden. Dabei wird die Druckanforderung der vorhergehenden Statusbestimmung mit der Druckanforderung der aktuellen Statusbestimmung verglichen, wobei die aktuelle Druckanforderung verworfen wird, wenn die Druckanforderung der aktuellen Statusbestimmung im Betrag um weniger als $p_{Kp}$ von der Druckanforderung der vorhergehenden Statusbestimmung abweicht. Dabei ist der Referenzfaktor Kp < 1 bar. Durch diese Maßnahme wird eine Ansteuerung der Hydraulikventile unterbrochen um den Regelungskomfort zu erhöhen und das Geräuschniveau zu senken.

Entsprechend erfolgt kein aktives Bremsen der stabilen Räder, wenn die berechnete Druckanforderung unterhalb der Fahrerbremsdruckanforderung liegt.

Um nach einer erfolgreichen Stabilisierung eines instabilen Rades ein erneutes Instabilwerden zu verhindern, werden die instabilen Räder der vorhergehenden Statusbestimmung mit den Rädern der aktuellen Statusbestimmung verglichen und beim Abbremsen eines vorhergehenden instabilen Rades der Druckaufbau dieses Rades innerhalb eines Zeitraums von 1 bis 2 sec., vorzugsweise 1,5 sec., vorgenommen.

Der DTS-Modus wird deaktiviert, wenn alle Räder 11 bis 14 für mindestens 1 sec., vorzugsweise 1,5 sec. stabil laufen, d.h. an allen Räder die Radgeschindigkeiten in einem Band um die mittlere Radgeschwindigkeit liegen oder die Fahrzeuggeschwindigkeit < 2,5 km/h ist

**Patentansprüche**

1. Verfahren zur Aufrechterhaltung der Motorbremswirkung eines Fahrzeugs während einer Gefällefahrt durch einen aktiven, elektronisch gesteuerten Bremseneingriff an mindestens einem Rad, **gekennzeichnet durch** eine Statusbestimmung aller Räder (11,12,13,14) und eine Aufteilung in stabile Räder und in instabile Räder, wobei die Bremseingriffe für die stabilen Räder erst dann aktiviert und alle stabilen Räder (11 12 13 14) abgebremst werden, wenn bei mindestens einem instabilen Rad die Bedingung

$$V_{instabil} < K_i \times V_{ref}$$

auftritt, mit

$V_{instabil}$ = Geschwindigkeit des instabilen Rades

$V_{ref}$ = mittlere Radgeschwindigkeit der stabilen Räder

$K_i$ = Korrekturfaktor.

2. Verfahren nach Anspruch 1, **dadurch gekennzeichnet, daß** der Status der Räder nach

$$V_{ref} - K_b < V_{stabil} < V_{ref} + K_b$$

bestimmt wird, mit

$V_{ref}$ = mittlere Radgeschwindigkeit der stabilen Räder

$K_b$ = Korrekturfaktor

$V_{stabil}$ = stabiles Rad.

3. Verfahren nach Anspruch 1 oder 2, **dadurch gekennzeichnet, daß** der Korrekturfaktor $K_b$ = 2,5 km/h, vorzugsweise $K_b$ = 1,3 km/h, ist.

4. Verfahren nach einem der Ansprüche 1 bis 3, **dadurch gekennzeichnet, daß** die mittlere Radgeschwindigkeit der stabilen Räder $V_{ref}$ aus dem gefilterten maximalen Wert des zweitschnellsten Rades und der Fahrzeuggeschwindigkeit gebildet wird.

5. Verfahren nach einem der Ansprüche 1 bis 3, **dadurch gekennzeichnet, daß** die Fahrzeuggeschwindigkeit die ABS-Referenzgeschwindigkeit ist.

6. Verfahren nach einem der Ansprüche 1 bis 4, **dadurch gekennzeichnet, daß** der Korrekturfaktor $K_i$ < 1/2 ist.

7. Verfahren nach einem der Ansprüche 1 bis 5, **dadurch gekennzeichnet, daß** die Radbeschleunigung des instabilen Rades < -0,4 g ist.

8. Verfahren nach einem der Ansprüche 1 bis 6, **dadurch gekennzeichnet, daß** die Druckanforderung für die stabilen Räder nach $req_p = K \times (V_{ref} - V_{ref\,nom}))$ + Offset bestimmt wird, mit

$req_p$ = Druckanforderung der stabilen Räder,

$V_{ref\,nom}$ = Durchschnittsgeschwindigkeit aller Räder vor Erkennen eines instabilen Rades

K = 7 bar/(km/h)

Offset = 5 bar.

9. Verfahren nach einem der Ansprüche 1 bis 7, **dadurch gekennzeichnet, daß** die Statusbestimmungen über eine Anzahl von n Zeitschritten aufgeteilt werden und mindestens die Werte der letzten Statusbestimmung gespeichert werden.

10. Verfahren nach einem der Ansprüche 1 bis 8, **dadurch gekennzeichnet, daß** die Druckanforderung der vorhergehenden Statusbestimmung mit der Druckanforderung der aktuellen Statusbestimmung verglichen wird, wobei die aktuelle Druckanforderung verworfen wird, wenn die Druckanforderung der aktuellen Statusbestimmung im Betrag um weniger als $P_{Kp}$ von der Druckanforderung der vorhergehenden Statusbestimmung abweicht.

**11.** Verfahren nach einem der Ansprüche 1 bis 9, **dadurch gekennzeichnet, daß** $P_{Kp}$ der Referenzdruckwert < 1 bar ist.

**12.** Verfahren nach einem der Ansprüche 1 bis 10, **dadurch gekennzeichnet, daß** die instabilen Räder der vorhergehenden Statusbestimmung mit den Rädern der aktuellen Statusbestimmung verglichen werden und beim Abbremsen eines vorhergehenden instabilen Rades der Druckaufbau dieses Rades verzögert wird.

**13.** Verfahren nach einem der Ansprüche 1 bis 10, **dadurch gekennzeichnet, daß** der aktuelle Druckaufbau am vorhergehenden instabilen Rad innerhalb eines Zeitraums von 1 bis 2 sec., vorzugsweise 1,5 sec., vorgenommen wird.

**14.** Verfahren nach einem der Ansprüche 1 bis 12, **dadurch gekennzeichnet, daß** das Verfahren zur Aufrechterhaltung der Motorbremswirkung nur in Funktion tritt, wenn die Fahrzeuggeschwindigkeit < 30 km/h, vorzugsweise < 20 km/h, ist, das System verfügbar ist, keine Giermomentenregelung aktiv ist und die Fahrerbremsdruckvorgabe kleiner als die zum Abbremsen der stabilen Räder ermittelten Druckanforderung ist.

**Claims**

**1.** Method of maintaining the effect of the engine brake of a vehicle during hill descent by way of an active, electronically controlled intervention of the brakes on at least one wheel,
**characterized by** a determination of the status of all wheels (11, 12, 13, 14) and a split-up into stable wheels and unstable wheels, wherein the braking interventions for the stable wheels are only activated and all stable wheels (11, 12, 13, 14) are decelerated when on at least one unstable wheel the condition

$$V_{unstable} < K_i \times V_{ref}$$

occurs, wherein
$V_{unstable}$ = speed of the unstable wheel
$V_{ref}$ = medium wheel speed of the stable wheels
$K_i$ = correction factor.

**2.** Method as claimed in claim 1,
**characterized in that** the status of the wheels is determined according to

$$V_{ref} - K_b < V_{stable} < V_{ref} + K_b$$

wherein
$V_{ref}$ = medium speed of the stable wheels
$K_b$ = correction factor
$V_{stable}$ = stable wheel.

**3.** Method as claimed in claim 1 or claim 2,
**characterized in that** the correction factor $K_b$ = 2.5 km/h, preferably, $K_b$ = 1.3 km/h.

**4.** Method as claimed in any one of claims 1 to 3,
**characterized in that** the medium wheel speed of the stable wheels $V_{ref}$ is produced from the filtered maximum value of the second fastest wheel and the vehicle speed.

**5.** Method as claimed in any one of claims 1 to 3,
**characterized in that** the vehicle speed is the ABS reference speed.

**6.** Method as claimed in any one of claims 1 to 4,
**characterized in that** the correction factor Ki < ½.

**7.** Method as claimed in any one of claims 1 to 5,
**characterized in that** the wheel acceleration of the unstable wheel is less than -0.4 g.

**8.** Method as claimed in any one of claims 1 to 6,
**characterized in that** the pressure requirement for the stable wheels is determined according to

$$req_p = K \times (V_{ref} - V_{ref\ nom})) + offset,$$

wherein
$req_p$ = pressure requirement of the stable wheels,
$V_{ref\ nom}$ = average speed of all wheels before an unstable
wheel is detected,
K = 7 bar/(km/h)
offset = 5 bar.

**9.** Method as claimed in any one of claims 1 to 7,
**characterized in that** the status determinations are split up over a number of n time steps, and at least the values of the last status determination are stored.

**10.** Method as claimed in any one of claims 1 to 8,
**characterized in that** the pressure requirement of the preceding status determination is compared with the pressure requirement of the current status determination, and the current pressure requirement is overruled when the pressure requirement of the current status determination differs in its amount by less than $P_{Kp}$ from the pressure requirement of the preceding status determination.

**11.** Method as claimed in any one of claims 1 to 9,

**characterized in that** $P_{Kp}$ is the reference pressure value < 1 bar.

**12.** Method as claimed in any one of claims 1 to 10, **characterized in that** the unstable wheels of the preceding status determination are compared with the wheels of the current status determination, and upon deceleration of a preceding unstable wheel, the pressure build-up on this wheel is delayed.

**13.** Method as claimed in any one of claims 1 to 10, **characterized in that** the current pressure build-up on the preceding unstable wheel is carried out within a period of time of 1 to 2 seconds, preferably, 1.5 seconds.

**14.** Method as claimed in any one of claims 1 to 12, **characterized in that** the method of maintaining the effect of the engine brake starts to operate only if the vehicle speed is < 30km/h, preferably < 20 km/h, the system is available, no yaw torque control is active, and the driver's preset demand for brake pressure is less than the pressure requirement determined for decelerating the stable wheels.

## Revendications

**1.** Procédé pour maintenir l'action de frein moteur d'un véhicule pendant le déplacement de descente, au moyen d'une action de freinage commandée électroniquement au niveau d'au moins une roue, **caractérisé par** une détermination de l'état de toutes les roues (11, 12, 13, 14) selon un classement en roues stables et en roues instables, les interventions de freinage pour les roues stables étant activées et toutes les roues stables (11, 12, 13, 14) étant freinées uniquement lorsque pour au moins une roue instable apparaît la condition

$$V_{instable} < K_i \times V_{ref}$$

avec
$V_{instable}$ = vitesse de la roue instable,
$V_{ref}$ = vitesse moyenne des roues stables,
$K_i$ = facteur de correction.

**2.** Procédé selon la revendication 1, **caractérisé en ce que** l'état des roues est déterminé conformément à

$$V_{ref} - K_b < V_{stable} < V_{ref} + K_b$$

avec
$V_{ref}$ = vitesse des roues stables
$K_b$ = facteur de correction

$V_{stable}$ = roue stable

**3.** Procédé selon la revendication 1 ou 2, **caractérisé en ce que** le facteur de correction est $K_b$ = 2,5 km/h, de préférence $K_b$ = 1,3 km/h.

**4.** Procédé selon l'une des revendications 1 à 3, **caractérisé en ce que** la vitesse moyenne des roues stables $V_{ref}$ est formée à partir de la valeur maximale filtrée de la roue la plus rapide en second et de la vitesse du véhicule.

**5.** Procédé selon l'une des revendications 1 à 3, **caractérisé en ce que** la vitesse du véhicule est la vitesse de référence ABS.

**6.** Procédé selon l'une des revendications 1 à 4, **caractérisé en ce que** le facteur de correction est $K_i$ < 1/2.

**7.** Procédé selon l'une des revendications 1 à 5, **caractérisé en ce que** l'accélération de la roue instable est < -0,4 g.

**8.** Procédé selon l'une des revendications 1 à 6, **caractérisé en ce que** la demande de pression pour les roues stables est déterminée conformément à

$$req_p = K \times (V_{ref} - V_{ref\,nom})) + Offset$$

avec
$req_p$ = demande de pression des roues stables,
$V_{ref\,nom}$ = Vitesse moyenne de toutes les roues avant l'identification d'une roue instable,
$K$ = 7 bars/(km/h)
Offset = 5 bars.

**9.** Procédé selon l'une des revendications 1 à 7, **caractérisé en ce que** les déterminations d'état sont réparties sur un nombre de n créneaux temporels et au moins les valeurs de la dernière détermination d'état sont mémorisées.

**10.** Procédé selon l'une des revendications 1 à 8, **caractérisé en ce que** l'exigence de pression de la détermination d'état précédente est comparée à l'exigence de pression de la détermination d'état actuelle, l'exigence actuelle de pression étant rejetée lorsque l'exigence de pression de la détermination actuelle d'état diffère, en valeur absolue, de moins de $P_{Kp}$, par rapport à l'exigence de pression de la détermination précédente d'état.

**11.** Procédé selon l'une des revendications 1 à 9, **caractérisé en ce que** $P_{Kp}$ est la valeur de pression de référence< 1 bar.

**12.** Procédé selon l'une des revendications 1 à 10, **caractérisé en ce que** les roues instables et la détermination précédente d'état sont comparées aux roues de la détermination actuelle d'état et que dans le cas d'un freinage d'une roue précédente instable, l'établissement de la pression dans cette roue est retardé.

**13.** Procédé selon l'une des revendications 1 à 10, **caractérisé en ce que** l'établissement actuel de la pression au niveau de la roue précédente instable est exécuté au cours d'un intervalle de temps compris entre 1 et 2 s, de préférence égal à 1,5 s.

**14.** Procédé selon l'une des revendications 1 à 12, **caractérisé en ce que** le procédé pour le maintien de l'action du frein moteur entre en jeu uniquement lorsque la vitesse du véhicule est < 30 km/h, de préférence < 20 km/h, que le système est disponible, qu'aucune régulation du moment de lacet n'est actif et que la prédétermination de la pression de freinage du conducteur est inférieure à l'exigence de pression déterminée pour le freinage des roues stables.

Fig. 1

**Fig. 2**

```
                    ┌─────────────────┐
                    │   Loop Start    │
                    └─────────────────┘
                             │
                             ▼
                          ╱─────╲
                         ╱  DTS  ╲         nein
              ( 1 )     ╱ erlaubt? ╲──────────────┐
                         ╲         ╱               │
                          ╲─────╱                  │
                             │ ja                  │
                             ▼                      │
                    ┌─────────────────┐            │
                    │ Status der Räder │            │
              ( 2 ) │   bestimmen     │            │
                    │ ( stabil / instabil ) │       │
                    └─────────────────┘            │
                             │                      │
                             ▼                      │
                          ╱─────╲                   │
                         ╱ DTS - Akti- ╲    nein     │
              ( 3 )     ╱ vierungsbed. ╲────────┐   │
                         ╲  erfüllt ?  ╱         │   │
                          ╲─────╱                │   │
                             │ ja               │   │
                             ▼                   │   │
                    ┌─────────────────┐         │   │
              ( 4 ) │ Druckanforderung │         │   │
                    │   berechnen     │         │   │
                    └─────────────────┘         │   │
                             │                   │   │
                             ▼                   │   │
                    ┌─────────────────┐         │   │
                    │ Druckanforderung │         │   │
              ( 5 ) │   an stabilen   │         │   │
                    │ Rädern einstellen │        │   │
                    └─────────────────┘         │   │
                             │◄────────────────┘   │
                             │◄────────────────────┘
                             ▼
                    ┌─────────────────┐
                    │    Loop Ende    │
                    └─────────────────┘
```